# EUROPÄISCHE PATENTSCHRIFT

(11) **EP 3 797 055 B1**
(45) Veröffentlichungstag und Bekanntmachung des Hinweises auf die Patenterteilung: **09.08.2023**
(21) Anmeldenummer: 19722048.6
(22) Anmeldetag: 30.04.2019
(51) Int. Cl.: B60R 21/203

(54) **FAHRZEUGLENKRAD SOWIE LENKRADBAUGRUPPE MIT EINEM SOLCHEN FAHRZEUGLENKRAD**
VEHICLE STEERING WHEEL AND STEERING WHEEL ASSEMBLY HAVING A VEHICLE STEERING WHEEL OF THIS KIND
VOLANT DE VÉHICULE ET ENSEMBLE VOLANT MUNI DUDIT VOLANT DE VÉHICULE

(30) Priorität: 22.05.2018 DE 102018112224
(43) Veröffentlichungstag der Anmeldung: 31.03.2021
(73) Patentinhaber: ZF Automotive Safety Germany GmbH, 63743 Aschaffenburg (DE)
(72) Erfinder: SCHÜTZ, Dominik, 63872 Heimbuchenthal (DE); BACHMANN, Stefan, 63872 Heimbuchenthal (DE)
(74) Vertreter: ZF Patentabteilung - DIPS
(86) Internationale Anmeldenummer: PCT/EP2019/061043
(87) Internationale Veröffentlichungsnummer: WO 2019/223969

(56) Entgegenhaltungen:
- WO-A1-2015/131993
- WO-A2-2011/100960
- US-A1- 2012 306 184

## Beschreibung

Die Erfindung betrifft ein Fahrzeuglenkrad mit einer Lenkradachse, um die das Fahrzeuglenkrad im eingebauten Zustand drehbar ist, einem Lenkradskelett, welches im Bereich der Lenkradachse einen Nabenabschnitt aufweist, sowie einem separaten Rastzapfen zur Verrastung mit einem Gassackmodul, der sich in axialer Richtung erstreckt und am Lenkradskelett montierbar ist.

Ferner betrifft die Erfindung auch eine Lenkradbaugruppe mit einem Gassackmodul und einem solchen Fahrzeuglenkrad.

Es ist bereits aus dem Stand der Technik bekannt, Fahrzeuglenkräder und Gassackmodule jeweils als vormontierte, separate Unterbaugruppen auszuführen und dann miteinander zu verbinden, um eine Lenkradbaugruppe zu bilden.

Da solche Lenkradbaugruppen im unmittelbaren Sicht- und Griffbereich des Fahrers vorgesehen sind, ergeben sich für die Verbindung zwischen den Unterbaugruppen hohe Anforderungen hinsichtlich Maßtoleranzen und daraus resultierenden Spaltmaßen. Gleichzeitig müssen bei einer Aktivierung des Gassackmoduls hohe Haltekräfte übertragen werden, um ein Lösen des Gassackmoduls vom Fahrzeuglenkrad zu verhindern.

Soll das Gassackmodul zudem für eine Hupenbetätigung in axialer Richtung relativ zum Fahrzeuglenkrad beweglich sein, ist die konstruktive Ausgestaltung der Verbindung besonders herausfordernd, weil dann neben einer hohen Haltekraft sowie einem minimalen Spaltmaß zwischen Modul und Lenkrad auch noch eine leichtgängige und klemmfreie Relativbewegung gewährleistet sein muss.

Schließlich soll die Verbindung auch schnell und einfach lösbar sein, um beispielsweise eine rasche Montage bzw. Demontage des Gassackmoduls oder des Lenkrads im Kraftfahrzeug zu ermöglichen. Aus diesem Grund sind mittlerweile Rastverbindungen zur Befestigung des Gassackmoduls am Fahrzeuglenkrad weit verbreitet.

Die WO 2011/100960 A2 zeigt ein gattungsgemäßes Fahrzeuglenkrad, bei dem separate, am Lenkradskelett montierbare Rastzapfen vorgesehen sind, welche mit einer Rastfeder des Gassackmoduls verrasten. Der Rastzapfen ist formschlüssig mit dem Lenkradskelett gekoppelt und kann daher die bei einer Aktivierung des Gassackmoduls auftretenden Kräfte zuverlässig in das Lenkradskelett übertragen. Die Formschlussverbindung weist jedoch auch ein gewisses Spiel auf, sodass zur Minimierung der Spaltmaße noch eine Feinjustierung der Rastzapfen relativ zum Lenkradskelett möglich ist. Neben dieser Rückhaltung und Feinpositionierung des Gassackmoduls kann der Rastzapfen zusätzlich noch die Axialführung des Gassackmoduls bei einer Betätigung der Fahrzeughupe übernehmen.

Somit sorgt der Rastzapfen für eine zuverlässige Modulbefestigung und übernimmt dabei eine Feinpositionierung und Führung des Gassackmoduls sowie eine robuste Fang- bzw. Rückhaltefunktion. Der Rastzapfen ist aufgrund der Rückhaltefunktion vergleichsweise massiv und konstruktiv aufwendig ausgebildet, da er nach einer Aktivierung des Gassackmoduls hohe Kräfte in das Lenkradskelett übertragen muss.

Die gattungsgemäße US 2012/0306184 A1 zeigt ein Fahrzeuglenkrad mit den Merkmalen im Oberbegriff des Anspruchs 1 sowie eine Lenkradbaugruppe, bei der ein Gassackmodul mittels eines Federelements am Fahrzeuglenkrad verrastet.

Aufgabe der Erfindung ist es, ein Fahrzeuglenkrad sowie eine Lenkradbaugruppe mit einer konstruktiv vereinfachten, besonders kompakten Verbindung zwischen einem Gassackmodul und einem Fahrzeuglenkrad zu schaffen, die jedoch weiterhin eine Feinpositionierung des Gassackmoduls, eine zuverlässige Rückhaltefunktion sowie optional eine axiale Modulführung bereitstellt.

Erfindungsgemäß wird diese Aufgabe gelöst durch ein Fahrzeuglenkrad mit den Merkmalen des Patentanspruchs 1.

Der Skeletthaken des Lenkradskeletts ist also in diesem Fall so ausgeführt, dass er direkt mit dem Gassackmodul, insbesondere mit einem Federelement des Gassackmoduls, verrastet. Diese unmittelbare Rastverbindung zwischen Gassackmodul und Lenkradskelett übernimmt nach einer Aktivierung des Gassackmoduls die Fang- bzw. Rückhaltefunktion. Das Lenkradskelett ist dabei bevorzugt ein einstückiges Metallteil, welches zum Beispiel eine Lenkradnabe, wenigstens eine Speiche sowie einen Lenkradkranz bildet, kann aber optional auch Anbauteile umfassen, die mit dem Metallteil im Wesentlichen starr verbunden, insbesondere fest verschraubt oder verschweißt sind. Auch die optionalen Anbauteile sind vorzugsweise aus Metall hergestellt, sodass am Lenkradskelett angeformte Skeletthaken auch hohe Rückhaltekräfte problemlos übertragen können. Die zusätzliche Rastverbindung des Gassackmoduls mit dem separaten Rastzapfen dient dann nur noch der Feinpositionierung des Gassackmoduls, um die Spaltmaße zu minimieren. Darüber hinaus kann der Rastzapfen optional noch eine Axialführung des Gassackmoduls übernehmen, um eine Hupenfunktion zu realisieren.

Es findet folglich eine Funktionstrennung statt, bei welcher der Skeletthaken die Fang- bzw. Rückhaltefunktion und der Rastzapfen die Feinpositionierungsfunktion sowie eine optionale Führungsfunktion übernimmt. Gleichzeitig grenzt der Rastzapfen unmittelbar an den Skeletthaken an und umgibt diesen teilweise. Somit sind die verschiedenen Funktionen trotz Funktionstrennung örtlich konzentriert, was zu einem geringen Bauraumbedarf führt. Darüber hinaus reduziert sich die maximale Beanspruchung des Rastzapfens erheblich, sodass dieser konstruktiv einfacher und filigraner ausgeführt werden kann. Dies trägt ebenfalls zu einem geringeren Bauraumbedarf bei, sodass sich insgesamt eine besonders kompakte Bauweise für die Lenkradbaugruppe ergibt.

Bevorzugt weist der Rastzapfen einen in axialer Richtung verlaufenden Schlitz auf, wobei sich der Skeletthaken in bzw. durch diesen Schlitz erstreckt. Ein geschlitzter Rastzapfen lässt sich mit geringem fertigungstechnischen Aufwand herstellen, und die Positionierung des Skeletthakens im Schlitz des Rastzapfens führt dann zu einer besonders platzsparenden Konstruktion.

Der Rastzapfen erstreckt sich in einer Ausführungsform des Fahrzeuglenkrads ausgehend vom Nabenabschnitt in axialer Richtung bis zu einem freien Ende und weist an dem freien Ende eine Rastnase mit einer Anlagefläche für eine Rastfeder des Gassackmoduls auf.

Der Skeletthaken erstreckt sich gemäß der Erfindung ausgehend vom Nabenabschnitt in axialer Richtung bis zu einem freien Ende und weist an dem freien Ende eine Rastnase mit einer Anschlagfläche für eine Rastfeder des Gassackmoduls auf.

Hierbei ist ein axialer Abstand der Anschlagfläche zum Nabenabschnitt bevorzugt größer als ein axialer Abstand der Anlagefläche zum Nabenabschnitt. Auf diese Weise stützt sich die Rastfeder des in axialer Richtung vom Nabenabschnitt weg beaufschlagten Gassackmoduls an der Anlagefläche des Rastzapfens ab, sodass über den Rastzapfen eine Feinpositionierung des Gassackmoduls möglich ist. Die Anschlagfläche des Skeletthakens ist hingegen von der Rastfeder beabstandet, sodass sich größere Fertigungstoleranzen lediglich auf das axiale Spiel zwischen Rastfeder und Anschlagfläche, nicht jedoch auf sichtbare Spaltmaße zwischen dem Gassackmodul und dem Lenkrad auswirken. Erst bei einer Auslösung des Gassackmoduls kann der Rastzapfen die auftretenden Kräfte unter Umständen nicht mehr aufnehmen, sodass die Rastfeder dann in Kontakt mit der Anschlagfläche kommt und die auftretenden Kräfte über den Skeletthaken zuverlässig ins Lenkradskelett weiterleitet.

Ferner ist ein axialer Abstand der Anschlagfläche zum Nabenabschnitt vorzugsweise kleiner ist als ein axialer Abstand der Anschlagfläche zu einem axial an die Anschlagfläche angrenzenden Bauteil des Fahrzeuglenkrads. Auf diese Weise lässt sich bei geringer axialer Abmessung des Skeletthakens eine besonders robuste und kompakte Rastverbindung mit dem Gassackmodul realisieren. Außerdem führen die kürzeren Skeletthaken zu fertigungstechnischen Vorteilen bei der Herstellung des Lenkradskeletts.

Das axial an die Anschlagfläche angrenzende Bauteil des Fahrzeuglenkrads kann in diesem Fall axial angrenzend an die Anschlagfläche eine Ausnehmung zur Aufnahme eines Gassackmodulabschnitts aufweisen. Das an die Anschlagfläche angrenzende Bauteil ist dabei bevorzugt ein Lenkradschaum, mit dem das Lenkradskelett zumindest teilweise umschäumt ist.

Gemäß einer weiteren Ausführungsform des Fahrzeuglenkrads grenzt eine Rastnase des Rastzapfens auf gegenüberliegenden Seiten der Anschlagfläche des Skeletthakens unmittelbar an den Skeletthaken an.

Der Skeletthaken ist vorzugsweise einstückig am Nabenabschnitt des Lenkradskeletts angeformt. Hierbei umfasst das Lenkradskelett besonders bevorzugt einen Metallkörper, insbesondere aus Metalldruckguss, der einen Speichenabschnitt und einen Kranzabschnitt des Lenkradskeletts bildet. Optional kann das Lenkradskelett darüber hinaus noch eine fest mit dem Metallkörper verbundene Montageplatte aufweisen, wobei der Nabenabschnitt des Lenkradskeletts durch den Metallkörper und/oder die Montageplatte gebildet wird. Die Montageplatte kann ebenfalls eine Metallplatte, insbesondere eine Stahlplatte sein.

Demgegenüber ist der Rastzapfen bevorzugt ein Kunststoffbauteil, wobei das Kunststoffbauteil optional faserverstärkt ausgeführt sein kann.

Gemäß einer weiteren Ausführungsform des Fahrzeuglenkrads sind mehrere Rastzapfen und Skeletthaken vorgesehen, wobei insbesondere jedem Skeletthaken ein Rastzapfen zugeordnet ist.

Vorzugsweise sind in dieser Ausführungsform die mehreren Rastzapfen miteinander verbunden, insbesondere einstückig miteinander verbunden, und bilden eine separate vorgefertigte Baugruppe. Diese Baugruppe oder die einzelnen Rastzapfen werden nach einer Feinausrichtung fest mit dem Lenkradskelett oder einer Umschäumung des Lenkradskeletts verbunden, insbesondere verschraubt oder verklippst. Alternativ oder zusätzlich können die Rastzapfen auch durch die Umschäumung an das Lenkradskelett angeschäumt und damit fixiert werden.

Die Erfindung betrifft im Übrigen auch eine Lenkradbaugruppe mit einem Gassackmodul und einem oben beschriebenen Fahrzeuglenkrad, wobei das Gassackmodul am Fahrzeuglenkrad verrastet ist.

Bevorzugt weist das Gassackmodul hierbei eine Rastfeder auf, welche sowohl mit dem Rastzapfen als auch mit dem Skeletthaken eine Rastverbindung ausbildet. Nach der Verrastung liegt die Rastfeder dabei insbesondere am Rastzapfen an, während sie vom Skeletthaken vorzugsweise axial beabstandet ist und erst nach einer Auslösung des Gassackmoduls mit diesem in Kontakt kommt.

Weitere Merkmale und Vorteile der Erfindung ergeben sich aus der nachfolgenden Beschreibung bevorzugter Ausführungsformen unter Bezugnahme auf die Zeichnungen. In diesen zeigt:
- Figur 1 eine teilgeschnittene, perspektivische Explosionsansicht eines erfindungsgemäßen Fahrzeuglenkrads;
- Figur 2 einen perspektivischen Ausschnitt des Fahrzeuglenkrads gemäß Figur 1 im zusammengesetzten Zustand;
- Figur 3 ein Detail des Fahrzeuglenkrads gemäß Figur 2 im Bereich eines Rastzapfens und Skeletthakens;
- Figur 4 ein weiteres Detail des Fahrzeuglenkrads gemäß Figur 2 im Bereich eines Rastzapfens und Skeletthakens mit schematisch angedeuteter Rastfeder;
- Figur 5 eine Untersicht eines vorgefertigten Gassackmoduls mit Rastfedern zur Verrastung am Fahrzeuglenkrad;
- Figur 6 einen schematischen Detailschnitt durch das Fahrzeuglenkrad gemäß den Figuren 1 bis 4 mit einer Rastfeder im verrasteten Zustand;
- Figur 7 einen schematischen Detailschnitt durch ein erfindungsgemäßes Fahrzeuglenkrad gemäß einer alternativen Ausführungsform;
- Figur 8 einen Ausschnitt eines erfindungsgemäßen Fahrzeuglenkrads im Bereich eines Skeletthakens gemäß einer weiteren Ausführungsform vor einer Montage des Gassackmoduls; und
- Figur 9 den Ausschnitt des Fahrzeuglenkrads gemäß Figur 8 nach einer Montage des Gassackmoduls.

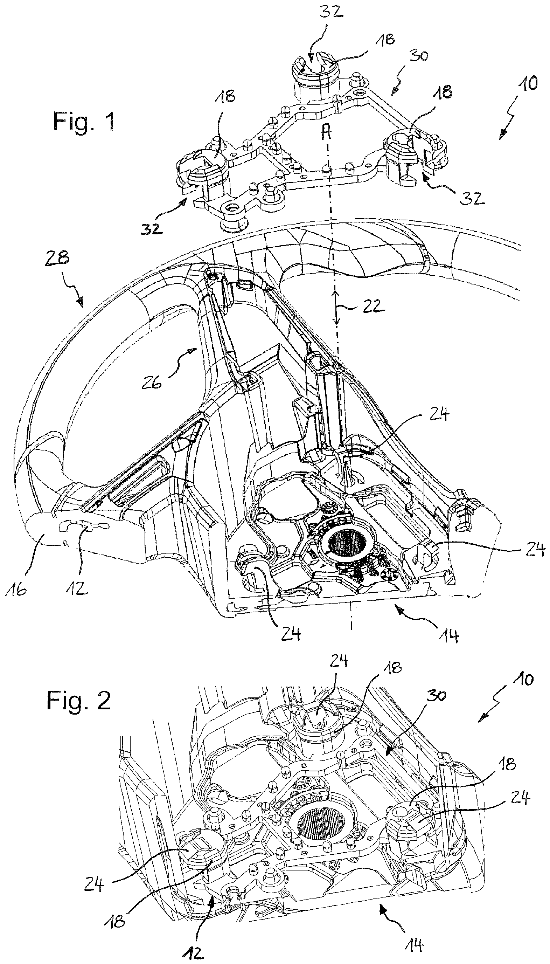

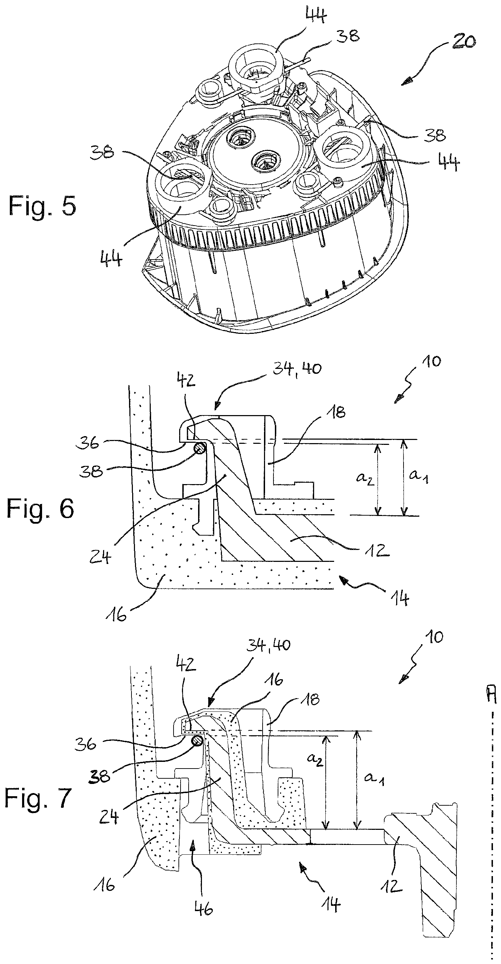

Die Figuren 1 und 2 zeigen ein Fahrzeuglenkrad 10 mit einer Lenkradachse A, um die das Fahrzeuglenkrad 10 im eingebauten Zustand drehbar ist, und einem Lenkradskelett 12, welches im Bereich der Lenkradachse A einen Nabenabschnitt 14 aufweist, wobei das Lenkradskelett 12 abschnittsweise von einem Lenkradschaum 16 umschäumt ist. Das Fahrzeuglenkrad 10 umfasst außerdem einen separaten Rastzapfen 18 zur Verrastung mit einem in Figur 5 dargestellten Gassackmodul 20, der sich in axialer Richtung 22 erstreckt und am Lenkradskelett 12 direkt oder über den Lenkradschaum 16 indirekt montierbar ist. Ferner weist der Nabenabschnitt 14 des Lenkradskeletts 12 einen starren Skeletthaken 24 zur Verrastung mit dem Gassackmodul 20 auf, der sich ebenfalls in axialer Richtung 22 erstreckt.

Der Skeletthaken 24 ist in der dargestellten Ausführungsform des Fahrzeuglenkrads 10 einstückig am Nabenabschnitt 14 des Lenkradskeletts 12 angeformt, wobei das Lenkradskelett 12 einen Metallkörper aus Metalldruckguss umfasst, der einen Speichenabschnitt 26 sowie einen Kranzabschnitt 28 des Lenkradskeletts 12 bildet. Optional kann das Lenkradskelett 12 darüber hinaus eine fest mit diesem Metallkörper verbundene Montageplatte aufweisen, wobei der Nabenabschnitt 14 des Lenkradskeletts 12 dann durch den Metallkörper und/oder die optionale Montageplatte gebildet wird.

Der Rastzapfen 18 ist hingegen bevorzugt ein Kunststoffbauteil, welches ein geringes Gewicht aufweist, in seiner Formgebung einfach anpassbar und insgesamt preiswert herstellbar ist.

Im vorliegenden Ausführungsbeispiel weist das Fahrzeuglenkrad 10 jeweils drei Rastzapfen 18 und Skeletthaken 24 auf, wobei jedem Skeletthaken 24 ein Rastzapfen 18 zugeordnet ist.

Anhand der Figur 1 ist gut zu erkennen, dass die mehreren Rastzapfen 18 einstückig miteinander verbunden sind und eine vorgefertigte, separate Baugruppe 30 bilden. Diese Baugruppe lässt sich dann einfach und schnell am Lenkradskelett 12 und/oder am Lenkradschaum 16 befestigen, beispielsweise durch Verrastung, Verschraubung oder Verklebung.

Die Figur 2 zeigt das Fahrzeuglenkrad 10 im zusammengesetzten Zustand, wobei jeder Rastzapfen 18 unmittelbar an seinen zugeordneten Skeletthaken 24 angrenzt und diesen in Umfangsrichtung teilweise umgibt.

Konkret weist jeder Rastzapfen 18 einen in axialer Richtung 22 verlaufenden Schlitz 32 auf (siehe Figur 1), durch den sich der zugeordnete Skeletthaken 24 im zusammengesetzten Zustand des Fahrzeuglenkrads 10 erstreckt (siehe Figur 2). Auf diese Weise entsteht eine äußerst kompakte Rastverbindung zwischen dem Fahrzeuglenkrad 10 und dem Gassackmodul 20, wobei der Skeletthaken 24 speziell der Aufnahme großer axialer Rückhaltekräfte nach einer Auslösung des Gassackmoduls 20 dient und der Rastzapfen 18 speziell zur Ausrichtung und Feinpositionierung des Gassackmoduls 20 relativ zum Fahrzeuglenkrad 10 vorgesehen ist, um im normalen Fahrbetrieb des Fahrzeugs für ein möglichst geringes und einheitliches Spaltmaß zu sorgen. Sofern eine Fahrzeughupe durch Axialverschiebung des Gassackmoduls 20 auslösbar sein soll, kann der Rastzapfen 18 gleichzeitig auch als Führungszapfen dienen, der eine Axialführung des Gassackmoduls 20 übernimmt.

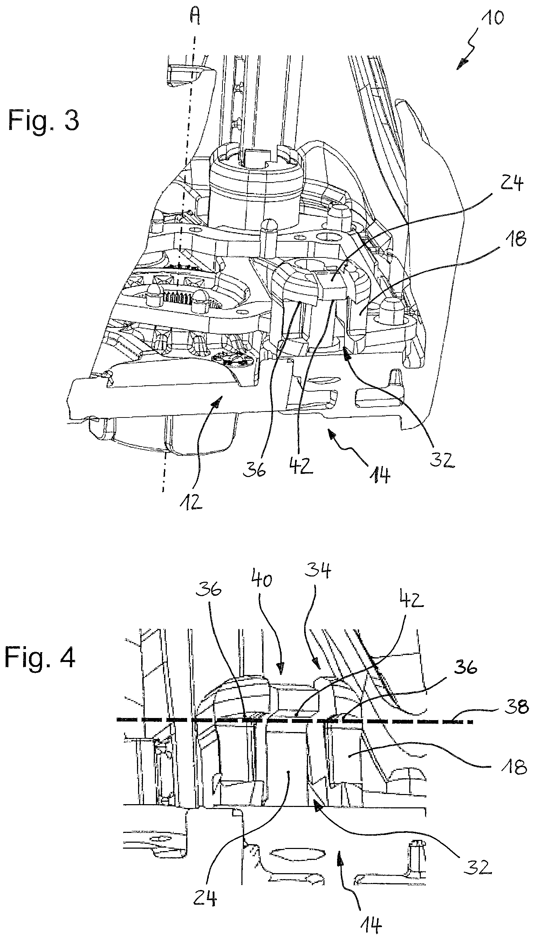

Die Figuren 3 und 4 zeigen perspektivische Detailansichten des zusammengesetzten Fahrzeuglenkrads 10 im Bereich eines Skeletthakens 24 und seines zugeordneten Rastzapfens 18.

Es ist gut zu erkennen, dass sich der Rastzapfen 18 ausgehend vom Nabenabschnitt 14 in axialer Richtung 22 bis zu einem freien Ende 34 erstreckt und am freien Ende 34 eine Rastnase mit einer Anlagefläche 36 für eine in Figur 4 schematisch angedeutete Rastfeder 38 des Gassackmoduls 20 aufweist. Innerhalb des Rastzapfen-Schlitzes 32 erstreckt sich der Skeletthaken 24 ausgehend vom Nabenabschnitt 14 in axialer Richtung 22 bis zu einem freien Ende 40 und weist an diesem freien Ende 40 eine Rastnase mit einer Anschlagfläche 42 für die Rastfeder 38 des Gassackmoduls 20 auf.

Auf diese Weise grenzt die Rastnase des Rastzapfens 18 auf gegenüberliegenden Seiten der Anschlagfläche 42 des Skeletthakens 24 unmittelbar an den Skeletthaken 24 an.

Ein axialer Abstand a₁ der Anschlagfläche 42 zum Nabenabschnitt 14 ist dabei größer als ein axialer Abstand a₂ der Anlagefläche 36 zum Nabenabschnitt 14, wie in den Figuren 6 und 7 dargestellt.

Nachdem das Gassackmodul 20 axial vom Nabenabschnitt 14 des Lenkradskeletts 12 weg beaufschlagt ist, beispielsweise durch wenigstens eine Hupenfeder, ist die Rastfeder 38 im normalen Fahrbetrieb mit der Anlagefläche 36 des Rastzapfens 18 in Kontakt, wobei die Anlagefläche 36 durch zwei Teilflächen auf gegenüberliegenden Seiten der Anschlagfläche 42 gebildet wird.

Erst bei einer außergewöhnlich hohen Beanspruchung des separaten Rastzapfens 18, beispielsweise bei einer Auslösung des Gassackmoduls 20, gibt der Rastzapfen 18 oder dessen Lagerung nach, sodass sich das Gassackmodul 20 mitsamt der Rastfeder 38 in axialer Richtung 22 geringfügig vom Nabenabschnitt 14 wegbewegt. Allerdings kommt die Rastfeder 38 dann unmittelbar in Kontakt mit der Anschlagfläche 42 des Skeletthakens 24, wobei der robuste Skeletthaken 24 eine zuverlässige Rückhaltung des Gassackmoduls 20 gewährleistet.

Die Figur 5 zeigt eine Untersicht des Gassackmoduls 20, welches für eine Verrastung mit dem in den Figuren 1 bis 4 dargestellten Fahrzeuglenkrad 10 geeignet ist.

An einem Modulboden des Gassackmoduls 20 sind drei hülsenartige Fortsätze 44 vorgesehen, die sich in axialer Richtung 22 erstrecken und denen jeweils eine Rastfeder 38 zugeordnet ist. Diese hülsenartigen Fortsätze 44 werden für die Montage des Gassackmoduls 20 am Nabenabschnitt 14 des Fahrzeuglenkrads 10 auf die Rastzapfen 18 und ihre zugeordneten Skeletthaken 24 gesteckt. Bei ausreichendem axialen Montagedruck verformen sich die Rastfedern 38 zunächst in radialer Richtung und schnappen dann hinter den Rastnasen der Rastzapfen 18 und Skeletthaken 24 zurück.

Nach der Montage des Gassackmoduls 20 bildet das Fahrzeuglenkrad 10 zusammen mit dem Gassackmodul 20 somit eine Lenkradbaugruppe, bei welcher das Gassackmodul 20 am Fahrzeuglenkrad 10 verrastet ist, wobei wenigstens eine Rastfeder 38 des Gassackmoduls 20 sowohl mit dem Rastzapfen 18 als auch mit dem Skeletthaken 24 eine Rastverbindung ausbildet.

Die Figur 6 zeigt einen schematischen Detailschnitt des Fahrzeuglenkrads 10, bei dem der Skeletthaken 24 nicht umschäumt ist, sondern im Bereich des Nabenabschnitts 14 axial aus dem Lenkradschaum 16 herausragt.

Analog zu Figur 6 ist in Figur 7 ein schematischer Detailschnitt des Fahrzeuglenkrads 10 gemäß einer alternativen Ausführungsform dargestellt. Der Skeletthaken 24 ist in diesem Fall umschäumt, als vollständig oder zumindest teilweise von Lenkradschaum 16 bedeckt. Um insbesondere auch im Bereich der Anschlagfläche 42 des Skeletthakens 24 eine Umschäumung sicherstellen zu können, wird beim Schäumvorgang ein spezielles Werkzeug verwendet, welches nach der Umschäumung dann einen Schaumkanal 46 hinterlässt, der in Figur 7 angedeutet ist.

Funktional hat diese Umschäumung des Skeletthakens 24 keine Bedeutung, da der Lenkradschaum 16 im Bereich der Anschlagfläche 42 keinen nennenswerten Widerstand bildet. Nach einer Auslösung des Gassackmoduls 20 stützt sich die Rastfeder 38 in jedem Fall axial an der Anschlagfläche 42 ab, wobei die Rastfeder 38 insbesondere axial in den Lenkradschaum 16 einschneiden und diesen verformen kann, sodass sie in direkten Kontakt mit der Anschlagfläche 42 kommt.

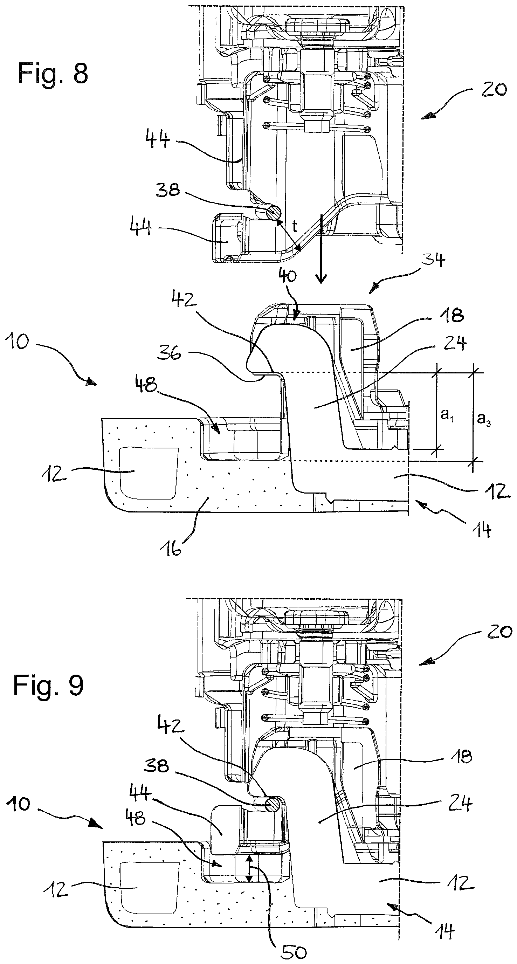

Die Figuren 8 und 9 zeigen jeweils einen Ausschnitt des Fahrzeuglenkrads 10 bzw. der Lenkradbaugruppe gemäß einer weiteren Ausführungsform, wobei in Figur 8 eine Situation vor der Verrastung des Gassackmoduls 20 am Fahrzeuglenkrad 10 und in Figur 9 eine Situation nach der Verrastung des Gassackmoduls 20 am Fahrzeuglenkrad 10 dargestellt ist.

Mit Bezug auf das Fahrzeuglenkrad 10 weist das vorliegende Ausführungsbeispiel die Besonderheit auf, dass ein axialer Abstand a₁ der Anschlagfläche 42 des Skeletthakens 24 zum im Wesentlichen ebenen, plattenförmig ausgebildeten Nabenabschnitt 14 des Lenkradskeletts 12 kleiner ist als ein axialer Abstand a₃ der Anschlagfläche 42 zu einem axial an die Anschlagfläche 42 angrenzenden Bauteil des Fahrzeuglenkrads 10. Auf diese Weise lässt sich bei geringer axialer Abmessung des Skeletthakens 24 eine besonders robuste und kompakte Verrastung des Gassackmoduls 20 am Fahrzeuglenkrad 10 realisieren. Eine geringe axiale Abmessung der Skeletthaken trägt dabei nicht nur zu einer axial besonders kompakten Bauform der Lenkradbaugruppe bei, sondern führt auch zu fertigungstechnischen Vorteilen bei der Herstellung des Lenkradskeletts 12.

Das axial an die Anschlagfläche 42 angrenzende Bauteil des Fahrzeuglenkrads 10 ist gemäß den Figuren 8 und 9 der Lenkradschaum 16, mit dem das Lenkradskelett 12 zumindest teilweise umschäumt ist. Der Lenkradschaum 16 weist axial angrenzend an die Anschlagfläche 42, gemäß Figur 8 also unterhalb der Anschlagfläche 42, eine Ausnehmung 48 zur Aufnahme eines Gassackmodulabschnitts auf, wobei dieser Gassackmodulabschnitt insbesondere ein Abschnitt des hülsenförmigen Fortsatzes 44 des Gassackmoduls 20 ist (siehe auch Figur 5). Der Lenkradschaum 16 bildet in diesem Bereich zusammen mit dem Nabenabschnitt 14 des Lenkradskeletts 12 einen im Wesentlichen ebenen, plattenförmigen Lenkradboden, in welchem die Ausnehmung vorgesehen ist, wobei eine axiale Abmessung der Ausnehmung 48 bevorzugt 4 - 8 mm, insbesondere etwa 6 mm beträgt.

Alternativ oder zusätzlich zum Lenkradschaum 16 kann das axial an die Anschlagfläche 42 angrenzende Bauteil auch durch die Baugruppe 30 und/oder das Lenkradskelett 12 gebildet werden.

Um im zusammengebauten Zustand der Lenkradbaugruppe gemäß Figur 9 bei einer Aktivierung des Gassackmoduls 20 zuverlässig zu verhindern, dass sich das Gassackmodul 20 vom Fahrzeuglenkrad 10 löst, muss die Rastfeder 38 und der hülsenförmige Fortsatz 44 entsprechend dimensioniert sein. Kritisch ist insbesondere eine Abmessung t (siehe Figur 8) des hülsenförmigen Fortsatzes 44, die ein vorbestimmbares Mindestmaß nicht unterschreiten darf.

Der hülsenförmige Fortsatz 44 greift im zusammengebauten Zustand der Lenkradbaugruppe in die Ausnehmung 48 des Lenkradschaums 16 ein. Ferner ermöglicht die Ausnehmung 48 eine axiale Verschiebung des Gassackmoduls 20 in Richtung zum Fahrzeuglenkrad 10, um eine Fahrzeughupe auszulösen. Ein maximaler Hupenbetätigungsweg 50 ist in Figur 9 durch einen Doppelpfeil angedeutet.

## Patentansprüche

1. Fahrzeuglenkrad mit
einer Lenkradachse (A), um die das Fahrzeuglenkrad (10) im eingebauten Zustand drehbar ist,
einem Lenkradskelett (12), welches im Bereich der Lenkradachse (A) einen Nabenabschnitt (14) aufweist, sowie
einem separaten Rastzapfen (18) zur Verrastung mit einem Gassackmodul (20), der sich in axialer Richtung (22) erstreckt und am Lenkradskelett (12) montierbar ist,
wobei der Nabenabschnitt (14) des Lenkradskeletts (12) einen starren Skeletthaken (24) zur Verrastung mit dem Gassackmodul (20) aufweist, der sich in axialer Richtung (22) erstreckt, und
wobei der Rastzapfen (18) an den Skeletthaken (24) angrenzt,
**dadurch gekennzeichnet, dass** der Rastzapfen (18) den Skeletthaken (24) in Umfangsrichtung zumindest teilweise umgibt,
wobei sich der Skeletthaken (24) ausgehend vom Nabenabschnitt (14) in axialer Richtung (22) bis zu einem freien Ende (40) erstreckt und am freien Ende (40) eine Rastnase mit einer Anschlagfläche (42) für eine Rastfeder (38) des Gassackmoduls (20) aufweist.

2. Fahrzeuglenkrad nach Anspruch 1, **dadurch gekennzeichnet, dass** der Rastzapfen (18) einen in axialer Richtung (22) verlaufenden Schlitz (32) aufweist und sich der Skeletthaken (24) in diesen Schlitz (32) erstreckt.

3. Fahrzeuglenkrad nach einem der vorhergehenden Ansprüche, **dadurch gekennzeichnet, dass** sich der Rastzapfen (18) ausgehend vom Nabenabschnitt (14) in axialer Richtung (22) bis zu einem freien Ende (34) erstreckt und am freien Ende (34) eine Rastnase mit einer Anlagefläche (36) für eine Rastfeder (38) des Gassackmoduls (20) aufweist.

4. Fahrzeuglenkrad nach Anspruch 3, **dadurch gekennzeichnet, dass** ein axialer Abstand (a₁) der Anschlagfläche (42) zum Nabenabschnitt (14) größer ist als ein axialer Abstand (a₂) der Anlagefläche (36) zum Nabenabschnitt (14).

5. Fahrzeuglenkrad nach einem der vorhergehenden Ansprüche, **dadurch gekennzeichnet, dass** ein axialer Abstand (a₁) der Anschlagfläche (42) zum Nabenabschnitt (14) kleiner ist als ein axialer Abstand (a₃) der Anschlagfläche (42) zu einem axial an die Anschlagfläche (42) angrenzenden Bauteil des Fahrzeuglenkrads (10).

6. Fahrzeuglenkrad nach Anspruch 5, **dadurch gekennzeichnet, dass** das axial an die Anschlagfläche (42) angrenzende Bauteil des Fahrzeuglenkrads (10) axial angrenzend an die Anschlagfläche (42) eine Ausnehmung (48) zur Aufnahme eines Gassackmodulabschnitts aufweist.

7. Fahrzeuglenkrad nach einem der Ansprüche 3 bis 6, **dadurch gekennzeichnet, dass** eine Rastnase des Rastzapfens (18) auf gegenüberliegenden Seiten der Anschlagfläche (42) des Skeletthakens (24) unmittelbar an den Skeletthaken (24) angrenzt.

8. Fahrzeuglenkrad nach einem der vorhergehenden Ansprüche, **dadurch gekennzeichnet, dass** der Skeletthaken (24) einstückig am Nabenabschnitt (14) des Lenkradskeletts (12) angeformt ist.

9. Fahrzeuglenkrad nach einem der vorhergehenden Ansprüche, **dadurch gekennzeichnet, dass** mehrere Rastzapfen (18) und Skeletthaken (24) vorgesehen sind, insbesondere wobei jedem Skeletthaken (24) ein Rastzapfen (18) zugeordnet ist.

10. Fahrzeuglenkrad nach Anspruch 9, **dadurch gekennzeichnet, dass** die mehreren Rastzapfen (18) miteinander verbunden sind und eine Baugruppe (30) bilden.

11. Lenkradbaugruppe mit einem Gassackmodul (20) und einem Fahrzeuglenkrad (10) nach wenigstens einem der vorhergehenden Ansprüche, wobei das Gassackmodul (20) am Fahrzeuglenkrad (10) verrastet ist.

12. Lenkradbaugruppe nach Anspruch 11, **dadurch gekennzeichnet, dass** das Gassackmodul (20) eine Rastfeder (38) aufweist, welche sowohl mit dem Rastzapfen (18) als auch mit dem Skeletthaken (24) eine Rastverbindung ausbildet.

## Claims

1. A vehicle steering wheel comprising
a steering wheel axis (A) about which the vehicle steering wheel (10) can be rotated in the installed state,
a steering wheel carcass (12) which has a hub section (14) in the region of the steering wheel axis (A), as well as
a separate latching peg (18) for latching with an airbag module (20), which extends in the axial direction (22) and can be mounted on the steering wheel carcass (12),
wherein the hub section (14) of the steering wheel carcass (12) includes a rigid carcass hook (24) for latching with the airbag module (20), which extends in the axial direction (22),
wherein the latching peg (18) adjoins the carcass hook (24),
**characterized in that** the latching peg (18) at least partially surrounds the carcass hook (24) in the circumferential direction,
wherein the carcass hook (24) extends starting from the hub section (14) in the axial direction (22) to a free end (40) and, at the free end (40), includes a latching lug having a stop face (42) for a latching spring (38) of the airbag module (20).

2. The vehicle steering wheel according to claim 1, **characterized in that** the latching peg (18) includes a slit (32) extending in the axial direction (22) and the carcass hook (24) extends into said slit (32).

3. The vehicle steering wheel according to any one of the preceding claims, **characterized in that** the latching peg (18) extends starting from the hub section (14) in the axial direction (22) to a free end (34) and, at the free end (34), includes a latching lug having a contact face (36) for a latching spring (38) of the airbag module (20).

4. The vehicle steering wheel according to claim 3, **characterized in that** an axial distance (a1) of the stop face (42) from the hub section (14) is larger than an axial distance (a2) of the contact face (36) from the hub section (14).

5. The vehicle steering wheel according to any one of the preceding claims, **characterized in that** an axial distance (a1) of the stop face (42) from the hub section (14) is smaller than an axial distance (a3) of the stop face (42) from a component of the vehicle steering wheel (10) axially adjoining the stop face (42).

6. The vehicle steering wheel according to claim 5, **characterized in that** the component of the vehicle steering wheel (10) axially adjoining the stop face (42) includes, axially adjoining the stop face (42), a recess (48) for receiving an airbag module section.

7. The vehicle steering wheel according to any one of the claims 3 to 6, **characterized in that** a latching lug of the latching peg (18) directly adjoins the carcass hook (24) on opposite sides of the stop face (42) of the carcass hook (24).

8. The vehicle steering wheel according to any one of the preceding claims, **characterized in that** the carcass hook (24) is formed integrally on the hub section (14) of the steering wheel carcass (12).

9. The vehicle steering wheel according to any one of the preceding claims, **characterized in that** plural latching pegs (18) and carcass hooks (24) are provided, especially wherein a latching peg (18) is assigned to each carcass hook (24).

10. The vehicle steering wheel according to claim 9, **characterized in that** the plural latching pegs (18) are interconnected and form an assembly (30).

11. A steering wheel assembly comprising an airbag module (20) and a vehicle steering wheel (10) according to at least one of the preceding claims, wherein the airbag module (20) is latched with the vehicle steering wheel (10).

12. The steering wheel assembly according to claim 11, **characterized in that** the airbag module (20) includes a latching spring (38) which forms a latching connection both with the latching peg (18) and with the carcass hook (24).

## Revendications

1. Volant de direction de véhicule comprenant
un axe de volant (A) autour duquel le volant de direction (10) du véhicule peut tourner à l'état monté,
une armature de volant (12) laquelle présente une section de moyeu (14) dans la zone de l'axe de volant (A), ainsi que
un tenon d'encliquetage (18) séparé pour l'encliquetage avec un module airbag (20), lequel s'étend dans la direction axiale (22) et peut être monté sur l'armature de volant (12),
pour lequel la section de moyeu (14) de l'armature de volant de direction (12) présente un crochet d'armature rigide (24) pour l'encliquetage avec le module airbag (20), qui s'étend dans la direction axiale (22), et
pour lequel le tenon d'encliquetage (18) est adjacent au crochet d'armature (24),
**caractérisé en ce que** le tenon d'encliquetage (18) entoure au moins partiellement le crochet d'armature (24) dans la direction circonférentielle,
pour lequel le crochet d'armature (24) s'étend en partant de la section de moyeu (14) dans la direction axiale (22) jusqu'à une extrémité libre (40) et présente à l'extrémité libre (40) un ergot d'encliquetage avec une surface de butée (42) pour un ressort d'encliquetage (38) du module airbag (20).

2. Volant de direction de véhicule selon la revendication 1, **caractérisé en ce que** le tenon d'encliquetage (18) présente une fente (32) s'étendant dans la direction axiale (22) et **en ce que** le crochet d'armature (24) s'étend dans cette fente (32).

3. Volant de direction de véhicule selon l'une des revendications précédentes, **caractérisé en ce que** le tenon d'encliquetage (18) s'étend dans la direction axiale (22) à partir de la section de moyeu (14) jusqu'à une extrémité libre (34) et présente à l'extrémité libre (34) un ergot d'encliquetage avec une surface d'appui (36) pour un ressort d'encliquetage (38) du module airbag (20).

4. Volant de direction de véhicule selon la revendication 3, **caractérisé en ce qu'**une distance axiale (a₁) de la surface de butée (42) à la section de moyeu (14) est supérieure à une distance axiale (a₂) de la surface d'appui (36) à la section de moyeu (14).

5. Volant de direction de véhicule selon l'une des revendications précédentes, **caractérisé en ce qu'**une distance axiale (a₁) de la surface de butée (42) à la section de moyeu (14) est inférieure à une distance axiale (a₃) de la surface de butée (42) à un composant du volant de direction de véhicule (10) adjacent axialement à la surface de butée (42).

6. Volant de direction de véhicule selon la revendication 5, **caractérisé en ce que** le composant du volant de direction de véhicule (10) adjacent axialement à la surface de butée (42) présente un évidement (48) adjacent axialement à la surface de butée (42) pour recevoir une portion du module airbag.

7. Volant de direction de véhicule selon l'une quelconque des revendications 3 à 6, **caractérisé en ce qu'**un ergot d'encliquetage du téton d'encliquetage (18) est directement adjacent au crochet d'armature (24) sur des côtés opposés de la surface de butée (42) du crochet d'armature (24).

8. Volant de direction de véhicule selon l'une quelconque des revendications précédentes, **caractérisé en ce que** le crochet d'armature (24) est formé d'un seul tenant sur la section de moyeu (14) de l'armature de volant (12).

9. Volant de direction de véhicule selon l'une des revendications précédentes, **caractérisé en ce qu'**il est prévu plusieurs tenons d'encliquetage (18) et crochets d'armature (24), en particulier un tenon d'encliquetage (18) étant associé à chaque crochet d'armature (24).

10. Volant de direction de véhicule selon la revendication 9, **caractérisé en ce que** les différents tenons d'encliquetage (18) sont reliés entre eux et forment un ensemble (30).

11. Ensemble de volant de direction comprenant un module airbag (20) et un volant de direction de véhicule (10) selon au moins l'une des revendications précédentes, pour lequel le module airbag (20) est encliqueté sur le volant de direction de véhicule (10).

12. Ensemble de volant de direction selon la revendication 11, **caractérisé en ce que** le module airbag (20) présente un ressort d'encliquetage (38), lequel forme une liaison par encliquetage aussi bien avec le tenon d'encliquetage (18) qu'avec le crochet d'armature (24).
